# EUROPÄISCHE PATENTSCHRIFT

(11) **EP 1 482 249 B1**
(45) Veröffentlichungstag und Bekanntmachung des Hinweises auf die Patenterteilung: **10.09.2008**
(21) Anmeldenummer: 04011260.9
(22) Anmeldetag: 12.05.2004
(51) Int. Cl.: F24D 3/10

(54) **Rohrverteiler und Verfahren zur Herstellung eines Rohrverteilers**
Manifold and method for manufacturing a manifold
Distributeur et procédé de fabrication d'un distributeur

(30) Priorität: 28.05.2003 DE 10324454
(43) Veröffentlichungstag der Anmeldung: 01.12.2004
(73) Patentinhaber: Drljevic, Radisav, 85386 Eching (DE)
(72) Erfinder: Drljevic, Radisav, 85386 Eching (DE)
(74) Vertreter: Rings, Rolf

(56) Entgegenhaltungen:
- DE-A- 3 535 340
- DE-A- 19 807 150
- DE-U- 29 924 006

## Beschreibung

Die Erfindung betrifft einen Rohrverteiler zum Anschließen einer Mehrzahl von Rohren und/oder von Funktionselementen in einem Rohrleitungssystem gemäß den Merkmalen des Oberbegriffs des Anspruchs 1 sowie ein Verfahren zur Herstellung eines derartigen Rohrverteilers gemäß den Merkmalen des Oberbegriffs des Anspruchs 9. Ein Rohrverteiler gemäß dem Oberbegriff von Anspruch 1 und von Anspruch 9 ist z.B. aus dem Dokument EP 1 108 190 B1 bekannt.

Derartige Rohrverteiler werden in Rohrleitungssystemen als zentrale Verteiler eingesetzt. Beispielsweise werden in Heizungssystemen solche Rohrverteiler als Heizkreisverteiler zum Anschließen von einerseits einem Vor- und einem Rücklauf sowie von Funktionselementen, wie z.B. Entlüftungsventil, Durchflussmesser, Druckmessgeräte oder dergleichen verwendet. Auch in anderen Rohrleitungssystemen können derartige Verteiler eingesetzt werden. Die bekannten Verteiler weisen hierzu einen rohrförmigen Grundkörper auf, der mit einem oder zwei primären Anschlüssen eines relativ großen Durchmessers ausgestattet ist. An der Längsseite des Grundkörpers sind gegenüberliegende Anschlussöffnungen für sekundäre Anschlüsse vorgesehen, an welchen Rohrleitungen oder Funktionselemente mit einem gegenüber den primären Anschlüssen geringeren Durchmesser montierbar sind.

Ein solcher Rohrverteiler ist aus der DE 27 48 673 C2 bekannt. Hier werden an einem zentralen Hauptrohr für die sekundären Anschlüsse Abzweigungsrohre seitlich angeschweißt oder angelötet, an welchen ein Außengewinde zum Montieren der Abzweigungsrohre mittels einer Überwurfmutter vorgesehen wird. Das Herstellen eines Rohrverteilers durch Anschweißen jedes einzelnen Abzweigungsstutzens an den sekundären Anschlüssen ist zeitaufwändig und erfordert eine aufwändige Druckprüfung zum Sicherstellen der Dichtigkeit des Rohrverteilers.

Andererseits ist es bekannt, derartige Rohrverteiler durch Gießen beispielsweise aus Messing herzustellen, um an den sekundären Anschlussbereichen eine Verdickung des Grundkörpers zu erreichen. Letztere dient einerseits dem Vorsehen eines flachen Anschlussbereiches, um eine ausreichende Dichtfläche um die sekundären Anschlüsse herum zu realisieren. Andererseits kann durch Gießen das Material an unterschiedlichen Bereichen des Grundkörpers des Rohrverteilers unterschiedlich dick ausgebildet sein, sodass die Gewinde der sekundären Anschlüsse direkt aus dem Vollmaterial des Grundkörpers herausgearbeitet werden können. Ein solcher Rohrverteiler ist beispielsweise aus der Schweizer Patentschrift CH 651 908 A5 bekannt. Der Grundkörper dieses relativ dickwandigen Rohrverteilers ist durch Ziehen oder Fließpressen hergestellt, wobei mindestens eine Seite mit einer als Längsrippe bezeichneten flachen Verdickung versehen ist. In dieser Längsrippe werden die Gewinde für die Anschlüsse von Verteilungsrohren eingearbeitet. Nachteilig bei diesem bekannten Rohrverteiler ist einerseits der werkzeug- und herstellungsbezogene erhöhte Aufwand. Andererseits erfordern die seitlichen Verdickungen für die Abzweigungsrohre einen beträchtlichen Materialeinsatz. Insbesondere bei relativ teuren Materialien, wie z.B. Messing, führt dies insgesamt zu stark erhöhten Kosten. Für das Herstellen eines derartigen Rohrverteilers mittels Fließpressen oder Ziehen sind zudem teure Spezialwerkzeuge erforderlich.

Ein anderer, bekannter Rohrverteiler, beschrieben in der EP 1 108 190 B1, besteht aus einem relativ dünnwandigen rohrförmigen Grundkörper, der eine kreiszylindrische Grundform aufweist. Im Bereich der Abzweigungen sind lokale Querschnittserweiterungen vorgesehen um hier eine ausreichende Dichtfläche für Dichtungen von anzuschließenden Abzweigungsrohren vorzusehen. Nachteilig bei diesem bekannten Herstellungsverfahren von Rohrverteilern ist, dass die lokale Verformung in den Bereichen der Abzweigungen aufwändig herzustellen ist. Die Erweiterung von dem Querschnitt an den Abzweigungsöffnungen erfordert beispielsweise ein aufwändiges Innenhochdruckverfahren und komplizierte Schablonen und/oder eine entsprechende Innenform aufweisende teure Verformwerkzeuge. Des Weiteren ist bei diesem bekannten Rohrverteiler nachteilig, dass durch unterschiedliche Querschnitte über dem Rohrverteiler, d. h. durch die domartigen Erweiterungen an den Abzweigungen und dem ansonsten rohrförmigen Querschnitt, es zu nachteiligen Strömungsverhältnissen durch Verwirbelungen kommt. Die abgestuften unterschiedlichen Querschnittsbereiche können zudem zur Ablagerung von Schmutz führen. Nicht zuletzt weist ein derartiges kantiges Profil eines solchen Rohrverteilers eine im Heizungsbau unhandliche und ungewöhnliche äußere Form auf. Bei diesen dünnwandigen, bekannten Rohrverteilern ist auch eine 100 %-Entlüftung nicht möglich. Durch die nach innen gerichteten Befestigungskragen verbleibt immer ein Bereich mit Restluft. Bei unterschiedlichen Längenvarianten des Rohrverteilers sind zudem unterschiedliche Werkzeuge zum Herstellen der Erweiterungen an den jeweiligen Anschlussbereichen erforderlich.

Die vorliegende Erfindung hat demgegenüber zur Aufgabe, einen Rohrverteiler sowie ein Verfahren zu seiner Herstellung bereitzustellen, welche einfach zu realisieren sind bei geringen Herstellungskosten und einen strömungstechnisch wie auch hinsichtlich der Dichtigkeit verbesserten Rohrverteiler bereitstellen.

Diese Aufgabe wird durch einen Rohrverteiler mit den Merkmalen gemäß Anspruch 1 sowie durch das Herstellungsverfahren für einen derartigen Rohrverteiler mit den Schritten gemäß Anspruch 9 gelöst. Vorteilhafte Ausgestaltungen und Weiterbildungen sind Gegenstand der jeweiligen abhängigen Ansprüche.

Der Rohrverteiler gemäß der Erfindung weist mindestens einen primären Anschluss und eine Mehrzahl von sekundären Anschlüssen an den Seiten eines rohrförmigen Grundkörpers auf, wobei letzterer mit Aushalsungen für eine lösbare Befestigung an den sekundären Anschlüssen versehen ist. Die Erfindung ist dadurch gekennzeichnet, dass der Grundkörper des Rohrverteilers aus einem relativ dünnwandigen, im Querschnitt im Wesentlichen kreiszylindrischen Rohrprofil mit zwei durchgängig parallelen und einander gegenüberliegenden Abflachungen versehen ist, an welchen die sekundären Anschlüsse vorgesehen sind. Das Grundprofil des Grundkörpers kann auf diese Weise aus einem relativ dünnwandigen Rohrmaterial gebildet sein und unabhängig von der Länge des Rohrverteilers oder der Anzahl seiner sekundären Anschlüsse gleichermaßen einfach mit herkömmlichen Umformmaschinen hergestellt werden. Die durchgängigen Abflachungen an den Längsseiten des Grundkörpers haben den Vorteil, dass keine aufwändigen Vorkehrungen oder Verformungsoperationen erforderlich sind, um plane Dichtflächen um die sekundären Anschlüsse herum zu realisieren. Die Abflachungen, welche z. B. durch ein einfaches Biegeverformen eines kreiszylindrischen Ausgangsrohres herstellbar sind, bieten ohne besondere Bearbeitung oder Ausformung gleichmäßig ebene Bereiche für die Dichtflächen der sekundären Anschlüsse. Das Rohrprofil kann aus einem relativ dünnwandigen Grundrohr gebildet sein, welches an den Abflachungen wie auch an den anderen Bereichen eine gleichbleibend dünne Wandstärke aufweist. Der Rohrverteiler ist leicht. Das Vorsehen von durchgängigen Abflachungen an dem Grundkörper hat zudem den Vorteil, dass eine Strömungstechnisch negative Beeinflussung durch die sekundären Anschlüsse bzw. deren Dichtmittel nicht gegeben ist. Gegenüber den bisher bekannten, aus dem Vollmaterial herausgearbeiteten Rohrverteilern mit seitlichen Verdickungen weist der erfindungsgemäße Rohrverteiler eine Konstruktion auf, die fast vollständig durch spanlose, Verformbearbeitung herstellbar ist. Ein Ausfräsen oder zeitaufwändiges Bohren von Öffnungen in dickwandigen Bereichen wie im Stand der Technik ist nicht erforderlich. Das Vorsehen der Abflachungen durchgängig über annähernd die gesamte Länge des Grundkörpers hat zudem den Vorteil, dass bei der Montage der Grundkörper zwischen den sekundären Anschlüssen flache Angriffsflächen für Werkzeuge, wie z.B. Zangen, Maulschlüssel oder dergleichen liefert.

Die Abflachungen können durch ein seitlich abgeflachtes Ausgangsrohrprofil bei der Herstellung des Rohres direkt hergestellt sein oder durch eine anschließende Biegeverformung mittels einfacher Umformmaschinen hergestellt werden. Da der Rohrverteiler durch einfache mechanische Umformbearbeitung hergestellt ist, und die der Befestigung dienenden Aushalsungen nicht aufwändig angeschweißt oder montiert werden müssen, entfällt eine sonst erforderliche Dichtigkeitsprüfung des Rohrverteilers. Die maximal möglichen Drücke in dem Rohrverteiler entsprechen den bei Rohrsystemen mit Rohren gleichem Wandstärke sonst üblichen Maximaldrücken. Eine Materialschwächung wie bei einer Warmbearbeitung findet nicht statt. Der erfindungsgemäße Rohrverteiler ist somit sehr einfach herstellbar und in seiner Funktionalität hochwirksam.

Nach einer vorteilhaften Ausgestaltung der Erfindung sind die Abflachungen im Wesentlichen über die gesamte Länge des Grundkörpers vorgesehen. Somit weist der Rohr-verteiler einen strömungsgünstigen Querschnitt gleichbleibend über im Wesentlichen die gesamte Länge auf. Alternativ kann in Bereichen, in denen keine Abzweigungen vorgesehen sind, ein kreisrunder Querschnitt bestehen bleiben. Der über annähernd die gesamte Länge gleichbleibende Querschnitt mit durchgängigen Abflachungen weist auch den Vorteil auf, dass der Rohrverteiler über entsprechend geformten Klemmbügel oder Schraubschellen drehfest montiert werden kann. Das anschließende Montieren der primären Anschlüsse kann zudem durch ein Werkzeug, welches einen den Abflachungen entsprechenden Halteabschnitt aufweist, festgehalten werden. Ein Verspannen oder Verstellen von vormontierten Rohrverteilern beispielsweise an einem Montagegrundgestell, wird so vermieden.

Nach einer weiteren vorteilhaften Ausgestaltung der Erfindung weist der Grundkörper eine über die gesamte Länge im Wesentlichen gleichbleibende Mindestwanddicke derart auf, dass in den Aushalsungen für die sekundären Anschlüsse und an den Öffnungen der primären Anschlüsse Gewinde durch eine spanlose Bearbeitung insbesondere ein Walzen formbar sind. Die für ein lösbares Befestigen notwendigen Gewinde können direkt in den Aushalsungen ausgeformt werden. Vorzugsweise sind mindestens 2 1/2 Gewindegänge vorgesehen. Die Mindestwanddicke für das Einwalzen von den Gewinden in den Aushalsungen bestimmt so die erforderliche Wandstärke des Grundkörpers. Hierdurch sind keine aufwändigen Befestigungen für die Aushalsungen der sekundären Anschlüsse, wie z. B. ein Löten oder Schweißen, erforderlich. Außerdem ist die spanlose Bearbeitung ohne Materialverlust durchführbar und die Dauerfestigkeit wird erhöht durch Erhalten der äußeren Werkstofffaser.

Nach einer weiteren vorteilhaften Ausgestaltung der Erfindung sind die Abflachungen und die Aushalsungen im Wesentliche spanlos durch Umformen realisiert. Der Rohrverteiler weist so keine herstellungsbedingten Schwachstellen auf. Insbesondere kann der Rohrverteiler somit auch ohne jegliche Schweißverbindung ausgeführt sein. Die Umformbearbeitungen zur Herstellung der Abflachungen der Aushalsungen sind beispielsweise gemäß einer bevorzugten Ausführungsform ein Biegevorgang zum Herstellen der Abflachungen und ein Tiefziehen zum Herstellen der Aushalsungen der sekundären Anschlüsse. Auf diese Weise wird auch ein Rohrverteiler bereitgestellt, der in den Abmessungen und seiner Form in vorgegebenen Toleranzen leicht zu realisieren ist, da eine Wärmebearbeitung und/oder spanende Bearbeitungen, welche zu Verformungen oder einem Verzug führen können, vermieden werden.

Nach einer weiteren vorteilhaften Ausgestaltung der Erfindung sind die Abflachungen in ihrer Breite auf den Durchmesser der sekundären Anschlüsse derart angepasst, dass flache und ausreichend breite Dichtbereiche um diese Anschlüsse herum entstehen. Die sekundären Anschlüsse weisen beispielsweise 19,1 mm (3/4") oder 12,7 mm (1/2") Durchmesser auf, wohingegen die primären Anschlüsse beispielsweise als im Rohrleitungs- und Heizungsbauübliche 1" Abgänge realisiert sind. Die Breite der Abflachungen und damit der Dichtflächen ist in diesem Beispiel vorzugsweise etwas größer als die jeweiligen sekundären Abgänge, d. h. größer als 19,1 mm (3/4") oder 12,7 mm (1/2"). Der Rohrverteiler weist so eine ausreichende Dichtfläche um die sekundären Abgänge herum auf.

Nach einer weiteren vorteilhaften Ausgestaltung der Erfindung weist mindestens ein sekundärer Anschluss eine nach außen von dem Rohrverteiler weisende Aushalsung auf. Die nach außen weisende Ausweisung ist im eingebauten Zustand des Rohrverteilers an der Oberseite angeordnet, sodass mindestens ein sekundärer Anschluss ohne eine nach innen ragende Aushalsung vorgesehen ist. An diesem nach außen ragenden sekundären Anschluss ist es erfindungsgemäß möglich, eine vollständige Entlüftung vorzunehmen. Bei Vorsehen eines entsprechenden Entlüftungsventils an diesem sekundären Anschluss mit nach außen weisender Aushalsung kann nämlich bis in den letzten oberen Innenbereich der Rohrverteiler vollständig entlüftet werden. Dies ist nicht möglich, wenn alle sekundären Anschlüsse mit nach innen ragenden Aushalsungen versehen sind, da dann ein der Stärke der Aushalsung entsprechender oberer Innenraumbereich verbleibt, in dem Luft zurück bleibt. Der erfindungsgemäße Rohrverteiler ist demnach besonders geeignet für Niedrigdruckrohrleitungssysteme, wenn nicht ausreichend Flüssigkeitsdruck vorhanden ist, um eine vollständige Entlüftung an dem Rohrverteiler vorzunehmen. Die Aushalsungen an dem Rohrverteiler werden gemäß einer bevorzugten Ausführungsform durch Tiefziehen aus dem Material der Wand des Grundkörpers heraus gebildet. Mittels entsprechenden Tiefziehwerkzeugen und Senkformen kann so durch einfaches Umformen von Material eine ausreichende Aushalsung bzw. Kragen jeweils an den sekundären Anschlüssen vorgesehen werden. Die Aushalsungen des Rohrverteilers, welche durch Tiefziehen hergestellt sind, weisen zudem keine Materialschwachstellen auf, wie sie beispielsweise bei einem Warmumformen oder einem Anschweißen von Rohrnippeln entstehen würden.

Nach einer weiteren vorteilhaften Ausgestaltung der Erfindung sind zwei primäre Anschlüsse an gegenüberliegenden Enden vorgesehen, welche eine durch Pressen hergestellte verjüngte Halsform aufweisen. Ausgehend von einem Rohrstück mit gleichbleibendem Querschnitt kann so ein jeweils auf die erforderliche Länge angepasste Rohrverteiler für die gewünschte Anzahl von sekundären Anschlüssen geformt werden. Durch das Pressen entstehen an den primären Anschlüssen Materialanhäufungen, die ausreichend sind um auch 25,4mm (1'') Gewinde in einem sehr dünnwandigen Rohrverteiler vorzusehen. Die durch Pressen, halsförmig verjüngten Endabschnitte des Rohrverteilers sind auch strömungsgünstig für die Fluidströmung, da keine abrupten Kanten oder Ecken innerhalb des Rohrverteilers ausgebildet sind.

Die halsförmig verjüngten Abschnitte an den primären Anschlüssen können auch alternativ, anstatt durch Pressen, mittels einem Schmiedeverfahren hergestellt werden. Vorzugsweise sind die halsförmigen Verjüngungen durch Rundschmieden nach dem Herstellen der durchgängigen Abflachungen realisiert.

Das erfindungsgemäße Verfahren zur Herstellung eines Rohrverteilers für eine Verteilerstation eines Rohrleitungssystems gemäß den Schritten des Anspruchs 9 ist gekennzeichnet durch Verformen der Längsseiten eines relativ dünnwandigen, kreiszylindrischen Rohrprofils zur Herstellung von durchgängigen, parallelen und einander gegenüberliegenden Abflachungen und anschließendes Tiefziehen von jeweiligen Aushalsungen für sekundäre Anschlüsse in den jeweiligen Abflachungen. Mit diesem Verfahren ist es möglich, einen sehr leichten, durchgängig dünnwandigen Rohrverteiler herzustellen über im Wesentlichen spanlose Bearbeitungsschritte. Der Herstellungsvorgang erfordert keine spezifischen Bearbeitungstechniken oder Gießformen, und kann mit herkömmlichen Umformstationen oder Spezialmaschinen mit bekannten Bearbeitungsstationen ausgeführt werden. Die abgeflachten Profilseiten des Grundkörpers können für eine beliebige Anzahl und Anordnung von sekundären Anschlüssen hergestellt werden und je nach Bedarf mehr oder weniger tiefgezogene Aushalsungen aufweisen. An jeder Aushalsung ist automatisch ein abgeflachter Randbereich der durchgängigen Abflachungen des Grundkörpers geformt, sodass ein zusätzliches Bearbeiten oder aufwändiges Abdichten nicht erforderlich ist. Eine Abdichtung kann direkt an dem Randbereich des jeweiligen sekundären Anschlusses durch Auflegen von Dichtmaterial oder einer Ring-Dichtung erfolgen. Das Herstellungsverfahren ist wenig zeitauf wändig und erfordert lediglich eine geringe Anzahl von Bearbeitungsschritten. Gegenüber den vorbekannten, aus Vollmaterial realisierten Rohrverteilern mit verdicktem Abschnitt zum Vorsehen von einer ausreichenden Wandstärke für Gewinde ist das Verfahren wesentlich vereinfacht, da entsprechende Guss- oder Pressformen in der Herstellung nicht erforderlich sind.

Nach einer weiteren vorteilhaften Ausgestaltung der Erfindung werden die primären Anschlüsse durch Pressformen der Enden des Grundkörpers in verjüngte halsförmige und im Wesentlichen kreiszylindrische Befestigungsabschnitte gebildet. Hierfür kann beispielsweise ein dem Durchmesser der primären Anschlüsse entsprechender Dorn oder Stab in das Rohrprofil eingeschoben werden und von außen eine Pressung zum Herstellen der Befestigungsflansch oder -abschnitt ausgeführt werden. Die primären Anschlüsse sind somit ebenfalls spanlos durch einfaches Umformen der Endabschnitte des Grundprofils des Rohrverteilers herstellbar.

Nach einer weiteren vorteilhaften Ausgestaltung der Erfindung wird mindestens ein sekundärer Anschluss mit einer Aushalsung realisiert, die von dem Rohrverteiler nach außen weist. Die nach außen weisende Aushalsung wird ebenfalls durch Tiefziehen hergestellt. Hierfür wird eine gegenüberliegende, nach innen weisende Aushalsung zunächst in dem Rohrverteiler realisiert, anschließend wird durch diese hindurch mit dem gleichen Tiefziehwerkzeug durch Durchstecken die nach außen weisende Aushalsung geformt. Beim Ausformen mittels Tiefziehen wird entsprechend den herkömmlichen Verfahrensschritten beim Tiefziehen jeweils eine Gegenmatrize an der Außenseite bzw. der Innenseite des Rohrverteilers angelegt. Das realisieren einer nach außen weisenden Aushalsung ist denkbar einfach und es sind keine zusätzlichen Befestigungsschritte, wie ein Anlöten oder Anschweißen eines nach außen weisenden Anschlusskragens oder Rohrstückes erforderlich. Ein vollständig entlüftbarer Rohrverteiler mit strömungsgünstigem Querschnitt kann so auf denkbar einfache Weise mittels einfacher Umformoperationen hergestellt werden.

Nach einer weiteren vorteilhaften Ausgestaltung der Erfindung werden Innengewinde in den jeweiligen Aushalsungen durch direktes Walzen der Gewinde in den Wänden der Aushalsungen und der Befestigungsabschnitte der primären Anschlüsse geformt. Es ist somit nicht erforderlich, für die Anschlüsse flanschartige Auskragungen und hieran befestigte Überwurfmuttern oder dergleichen vorzusehen. Rohrleitungen oder Funktionselemente können anschließend in die so hergestellten Gewinde direkt eingeschraubt werden. Der so hergestellte Rohrverteiler ist äußerst einfach in seiner Konstruktion und mit nur wenigen, einfachen Bearbeitungsschritten herstellbar.

Nach einer weiteren vorteilhaften Ausgestaltung der Erfindung werden die Aushalsungen der sekundären Anschlüsse zeitversetzt tiefgezogen. Dies bedeutet, dass nebeneinanderliegende sekundäre Anschlüsse nicht direkt nacheinander bzw. miteinander zum Herstellen der Aushalsungen tiefgezogen werden. Dadurch können ansonsten auftretende Verspannungen in dem Rohrverteiler vermieden werden. Das zeitversetzte Tiefziehen kann alternativ oder zusätzlich mit einem ebenfalls zeitversetzten Vorbohren von kleinen Ansatzlöchern der jeweiligen sekundären Anschlüsse durchgeführt werden.

Nach einer weiteren vorteilhaften Ausgestaltung der Erfindung wird die mindestens eine nach außen weisende Aushalsung an ihrer Stirnfläche durch einen Fräsvorgang bearbeitet zum Herstellen einer planen Dichtfläche für ein Dichtungsmittel. Die für die Herstellung notwendige spanende Bearbeitung ist so auf ein Minimum reduziert und lediglich für ein etwaiges Vorbohren für die Tiefziehbearbeitung der Aushalsungen und das Herstellen von Dichtflächen durch Fräsen beschränkt. Mit äußerst geringem Materialverlust und nur wenig zeitaufwändigen spanenden Bearbeitungsschritten kann so ein kostengünstiger und in seiner Funktionalität verbesserter Rohrverteiler hergestellt werden.

Weitere Vorteile der Erfindung sind der nachfolgenden detaillierten Beschreibung zu entnehmen, in welcher die Erfindung mehr im Detail in Bezug auf die in den beigefügten Zeichnungen dargestellten Ausführungsbeispiele beschrieben wird.

In der Zeichnung zeigen:
- Fig. 1: eine Schnittansicht eines ersten Ausführungsbeispiels eines Rohrverteilers gemäß der vorliegenden Erfindung;
- Fig. 2: eine Draufsicht des Ausführungsbeispiels eines Erfindungsgemäßen Rohrverteilers aus Fig. 1;
- Fig. 3a, 3b: jeweilige Querschnittansichten des Ausführungsbeispiels eines erfindungsgemäßen Rohrverteilers aus Fig. 1;
- Fig. 4: eine teilweise geschnittene Seitenansicht eines zweiten Ausführungsbeispiels eines Rohrverteilers gemäß der Erfindung;
- Fig. 5: eine Draufsicht des Ausführungsbeispiels eines Rohrverteilers aus Fig. 4;
- Fig. 6: eine Querschnittansicht gemäß A-A des Ausführungsbeispiels aus Fig. 4;
- Fig. 7: eine Seitenansicht eines dritten Ausführungsbeispiels eines erfindungsgemäßen Rohrverteilers mit einer Mehrzahl von Funktionselementen als kombinierte, vormontierte Verteilerstation.

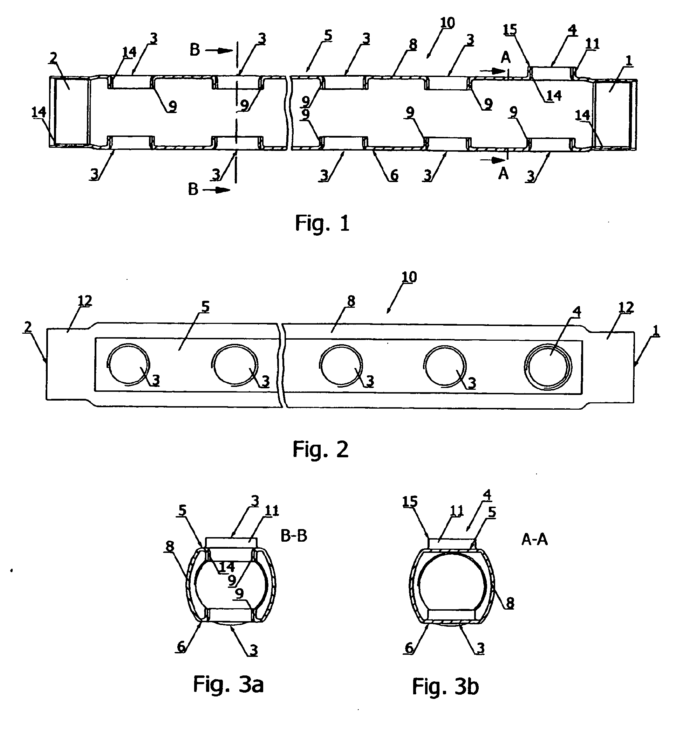

In den Fig. 1 und 2 ist ein erstes Ausführungsbeispiel eines erfindungsgemäßen Rohrverteilers in einer geschnittenen Seitenansicht und in einer Draufsicht wiedergegeben. Der Rohrverteiler 10 weist hier zwei primäre Anschlüsse 1, 2 an einem länglichen, im Wesentlichen kreiszylindrischen Grundkörper 8 auf. Der Rohrverteiler 10 weist an seiner Oberseite und seiner Unterseite jeweils eine durchgängige Abflachung 5,6 auf, welche aus einem Rohr mit kreiszylindrischen Querschnitt (vgl. auch Fig. 3a, 3b) an jeweils gegenüberliegenden Seiten hergestellt sind. An diesen Abflachungen 5, 6 sind mehrere, gegenüberliegende sekundäre Anschlüsse 3, 4 vorgesehen. Die sekundären Anschlüsse 3, 4 sind durch Vorbohren und Tiefziehen an den Abflachungen 5, 6 derart hergestellt, dass kragenförmige Aushalsungen 9, 11 entstehen. Die Mehrzahl der sekundären Anschlüsse 3 weist eine nach innen gerichtete Aushalsung 9 auf, wohingegen ein sekundärer Anschluss 4 mit einer nach außen ragenden Aushalsung 11 versehen ist.

Diese nach außen ragende Aushalsung 11 dient einem verbesserten und vollständigen Entlüften des Rohrverteilers in der Benutzung, da keine Restluftbereiche, wie bei den nach innen ragenden Aushalsungen 9 an der Oberseite im Innern des Rohverteilers 10 bestehen bleiben. Die sekundären Anschlüsse 3, 4 sind in diesem Ausführungsbeispiel mit einem 12,7 mm (1/2")-Innengewinde versehen und die primären Anschlüsse 1, 2 sind mit einem 25,4 mm (1") Innengewinde versehen. Zum Herstellen der primären Anschlüsse 1, 2 sind Befestigungsabschnitte 12 mit einer verjüngten Halsform durch Pressen bzw. Zusammendrücken an den Enden des Rohrverteilers 10 derart ausgebildet, dass im Wesentlichen kreiszylindrische Endabschnitte 12 entstehen. Die Innengewinde 14 an den primären 1, 2 und den sekundären Anschlüssen 3, 4 können durch Walzen realisiert sein und weisen eine ausreichende Tiefe auf, um Rohre, Rohrverbinder und/oder Funktionselemente (nicht dargestellt) eines Rohrleitungssystems zu befestigen. Die nach innen weisenden Aushalsungen 9 der sekundären Anschlüsse 3 werden durch anbohren und anschließendes Tiefziehen mit entsprechenden Tiefziehmatrizen und -werkzeugen realisiert. Diese Aushalsungen 9 erfordern keine weitere Bearbeitung als die eines Walzens von dem Innengewinde 14. Die nach außen weisende Aushalsung 11 des sekundären Anschlusses 14 hingegen, welche ebenfalls mittels Tiefziehen nach der gegenüberliegenden komplementären Innen-Aushalsung 9 realisiert wird, wird hingegen anschließend durch ein Fräswerkzeug oder Schleifwerkzeug mit einer planen, stirnseitigen Dichtfläche 15 versehen. Die Dichtfläche 15 dient einem Anlegen einer Dichtung bei einem Verschrauben eines Funktionselementes oder Entlüftungsventils (nicht gezeigt) an diesem sekundären Anschluss 4. An den primären Anschlüssen 1, 2 sind die Innenseiten am Ende ausgefast durch Fräsen, um eine Art Schulter zum Einsetzen von Dichtungen bereitzustellen.

In den Fig. 3a und 3b sind jeweilige Querschnittsansichten des Rohrverteilers gemäß Fig. 1 und 2 wiedergegeben. Fig. 3a zeigt einen Querschnitt entlang B-B und Fig. 3b einen Querschnitt entlang A-A. Aus diesen Figuren ist ersichtlich, dass die Wandstärke des Grundkörpers 8 in allen Bereichen im Wesentlichen gleich ist, nämlich in den Bereichen der Abflachungen 5, 6 sowie auch in den gerundeten Seitenbereichen als auch in den Aushalsungen 9, 11. Dies ist ein wesentliches Merkmal der Erfindung, da durch einfache mechanische Umformung ein relativ dünnwandiges jedoch hochbelastbares Rohrverteilerelement bereitgestellt wird, das zudem kostengünstig herstellbar ist. Die Querschnittprofilform des Grundkörpers mit gegenüberliegenden Abflachungen 5, 6 wird auf eine dem Fachmann bekannte Weise hergestellt. Beispielsweise werden zwei durch Biegen geformte Hälften des Grundkörpers 8 mittels longitudinalen Schweißnähten miteinander verbunden. Die abgeflachte Form kann auch durch ein Pressen oder Ziehen eines runden Rohres hergestellt werden. Das Grundprofil des Rohrverteilers kann jedoch auch durch einen Biegeverformungsvorgang hergestellt werden, beispielsweise indem ein auf die Abflachungen festgelegter Gegendruckstab in ein rundes Rohr eingeführt wird und von außen mittels einem Pressen die Abflachung 5, 6 hergestellt werden. Die Grundform mit jeweils durchgängigen Abflachungen 5, 6 des Grundkörpers 8 kann jedoch auch mittels anderen, dem Fachmann bekannten Verfahren hergestellt werden. Der Rohrverteiler gemäß der Erfindung kann vorzugsweise aus einem Messing- oder einem Edelstahlwerkstoff realisiert sein. Letzteres ist z. B. im Bereich der Lebensmitteltechnik vorteilhaft wegen der Lebensmittelechtheit.

Selbstverständlich ist die Erfindung nicht beschränkt auf die Form und Anzahl von sekundären Anschlüssen 3, 4, wie sie dargestellt wurde. Beispielsweise können auch mehr als ein sekundärer Anschluss 4 mit einer nach außen weisenden Aushalsung 11 vorgesehen sein. Die Mehrzahl der sekundären Anschlüsse 3, 4 können auch je nach erforderlicher Anzahl von Anschlussmöglichkeiten nur auf einer Seite vorgesehen sein, mit Ausnahme des Anschlusses, der eine nach außen weisende Aushalsung 11 aufweist, der einen gegenüberliegenden Anschluss 3 für seine Herstellung mittels Tiefziehen erfordert.

Alternativ können die primären Anschlüsse 1, 2 anstatt eines zylindrischen Endabschnitts einen nach außen weisenden Kragen bzw. Flanschteil (nicht dargestellt) aufweisen. Dieser nach außen weisende Kragen bietet vorteilhafterweise eine Dichtfläche zum Anbringen einer Dichtung zwischen Anschlussrohren und dem erfindungsgemäßen Rohrverteiler. Ebenso kann auf diese Art und Weise eine Befestigung mittels einer Überwurfmutter oder ähnliche Verschraubungen erfolgen.

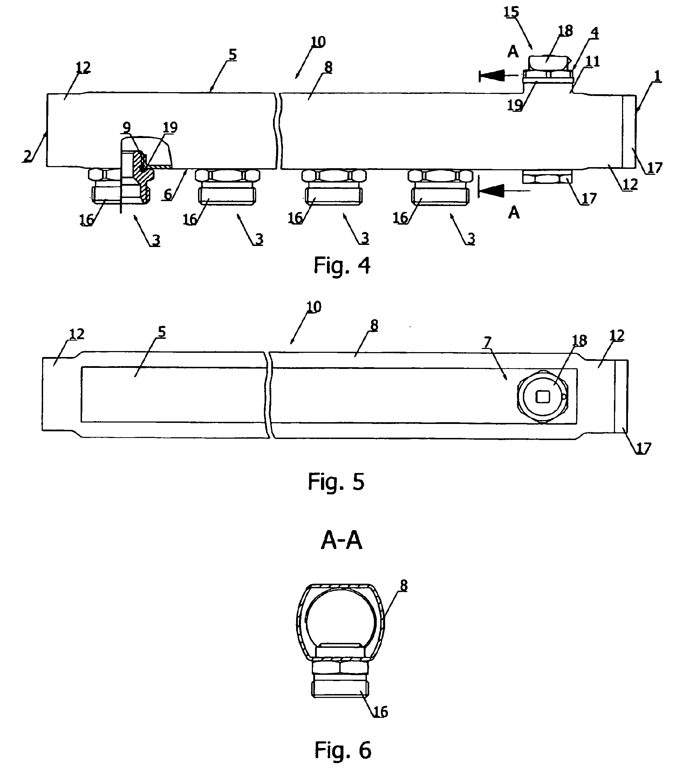

In den Fig. 4, 5 ist ein zweites Ausführungsbeispiel eines Rohrverteilers gemäß der vorliegenden Erfindung mit Funktionselementen 7 und Anschlussnippeln 16 in einer Seiten- und einer Draufsicht wiedergegeben. Bei diesem Ausführungsbeispiel ist an der oberen Abflachung 5 lediglich eine einzige Aushalsung 11 für einen sekundären Anschluss 4 vorgesehen. Der Rohrverteiler 10 weist wie bei dem zuvorigen Ausführungsbeispiel jeweils eine obere durchgängige Abflachung 5 und eine untere Abflachung 6 in einem ansonsten im Wesentlichen kreiszylindrischen Rohrprofil eines Grundkörpers 8 auf. Dies ist aus der zugehörigen Querschnittsdarstellung der Fig. 6 gemäß A-A ersichtlich. An der unteren Abflachung 6 sind eine Mehrzahl von sekundären Anschlüssen 3 vorgesehen, von denen der dem Entlüftungsventil 18 gegenüberliegende mit einem Verschlussstopfen 17 verschlossen ist. Die anderen sekundären Anschlüsse 3 sind hier mit einer Mehrzahl von Schraubnippeln 16 versehen, die in die Innengewinde an den jeweiligen Aushalsungen 9 eingeschraubt und mittels einer Dichtung 19 abgedichtet sind. Die Schraubnippel 16 dienen einem Befestigen von Rohren, es können aber auch Lötnippel zum Anlöten von Kupferrohren mittels Lötzinn verwendet werden. Andere Rohrverbinder wie sie dem Fachmann bekannt sind, können ebenso verwendet werden. Beispielsweise können doppelseitige Schraubmuffen für ein Verschrauben mit einem mit Gewinde versehenen Anschlussrohr an den sekundären Rohranschlüssen vorgesehen sein. Einer der primären Anschlüsse 1 ist hier mit einem Verschlussstopfen 17 verschlossen. Der andere primäre Anschluss 2 dient einem Anschluss eines zentralen Verteilerrohres, welches beispielsweise von einem Heizungskessel kommt. Die Abmessungen der primären Anschlüsse 1, 2 sind wie bei dem zuvorigen Ausführungsbeispiel mit einem 25,4 mm (1") Innengewinde versehen und die sekundären Anschlüsse 3 sind als 12,7 mm (1/2") Gewindeanschlüsse ausgestaltet. Das Lüftungsventil 18 ist ebenfalls mit einer Dichtung 19 abgedichtet, welche zwischen einer hierfür planbearbeiteten Stirnfläche 11 und das Ventil 18 eingesetzt ist.

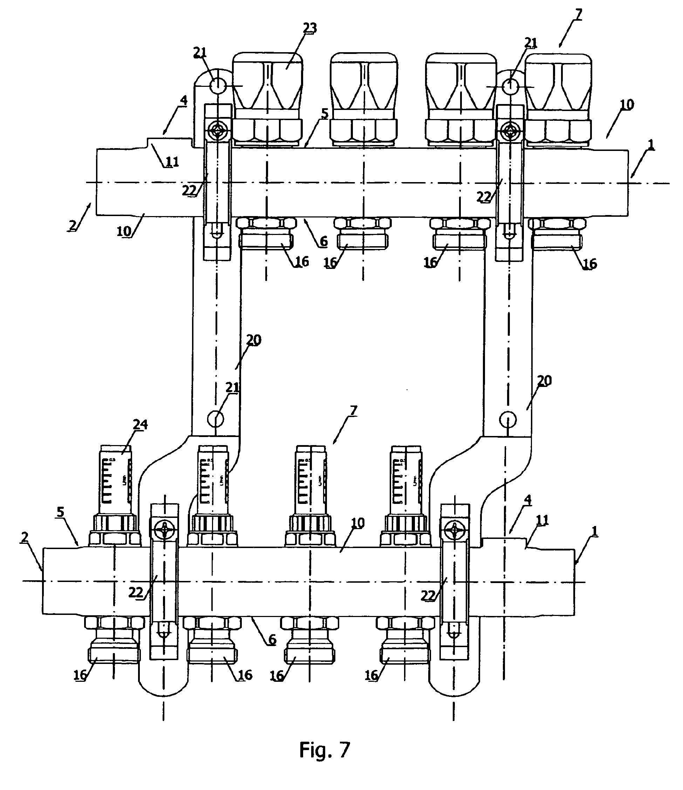

In Fig. 7 ist ein weiteres Ausführungsbeispiel einer Anordnung und Anwendung von erfindungsgemäßen Rohrverteilern mit einer Mehrzahl von verschiedenen Funktionselementen in einer Seitenansicht dargestellt. Hier sind zwei erfindungsgemäße Rohrverteiler 10 im montierten Zustand als kombinierte Verteilerstation zusammengesetzt. Dafür sind rückwärtige Befestigungsbleche 20 für eine Wandbefestigung vorgesehen, die mit Befestigungsbohrungen 21 und mit Rohrschellen 22 zum Halten der Rohrverteiler 10 ausgestattet sind. Zusätzlich zu den Schraubnippeln 16 an der unteren Abflachung 6 der Rohrverteiler 10 sind hier jeweils an der oberen Abflachung 5 des oberen Rohrverteilers eine Reihe von Thermostatventilen 23 vorgesehen. Der untere Rohrverteiler 10 ist mit einer Mehrzahl von Durchflussmessern 24 ausgestattet. Jeder der beiden Rohrverteiler 10, welche als kombinierte Verteilerstation an den Befestigungsblechen 20 fest montiert vorgesehen sind, weist je eine nach außen ragende Aushalsung 11 an einem sekundären Anschluss 4 an der Oberseite auf, d. h. an der oberen Abflachung 5. An dem sekundären Anschluss 4 kann somit ein vollständig entlüftbares Entlüftungsventil eingebaut werden. An den primären Anschlüssen 1, 2 werden jeweils die weiterführenden Hauptleitungen eines Rohrleitungssystems, beispielsweise eines Heizungssystems mittels entsprechenden Verschraubungen oder Gewindeabschnitten montiert. Somit wird eine kombinierte Verteilerstation mit allen erforderlichen Funktionselementen und entsprechenden Anschlusselementen vorgesehen, die strömungstechnisch auf Grund des erfindungsgemäßen spezifischen Profils des Grundkörpers 8 günstig ist. Es bestehen keine Probleme eines Abdichtens an den Anschlüssen 3, 4. Die Verteilerstation ist zudem einfach herzustellen, da lediglich herkömmliche Rohrbearbeitungs- bzw. Umformschritte erforderlich sind zur Herstellung der jeweiligen Rohrverteiler 10.

Selbstverständlich ist die Erfindung nicht auf die dargestellten Ausführungsbeispiele beschränkt und umfasst alle technischen Äquivalente, die unter den Wortlaut der nachfolgenden Ansprüche fallen. Beispielsweise kann die Anzahl von sekundären Anschlüssen unterschiedlich sein. Außerdem kann der Befestigungsabschnitt 12 an den primären Anschlüssen 1, 2 durch ein anderes Mittel, wie z. B. ein nach außen ragendes Flanschteil gebildet sein, an welches eine Verschraubmutter zum Befestigen von Rohranschlüssen angeordnet ist. Das Material der Rohrverteiler 10 kann Messing oder Edelstahl sein und ist vorzugsweise ein leicht umformbares Metallmaterial. Die Wanddicke der Rohrverteiler ist relativ dünn und ist vorzugsweise im Bereich von einigen Millimetern, beispielsweise 1,5 bis 3,5 mm, je nach dem Durchmesser der Rohrverteiler und den maximalen Druckverhältnissen in den jeweiligen Rohrleitungssystemen.

### Bezugszeichenliste

- 1, 2: primäre Anschlüsse
- 3, 4: sekundäre Anschlüsse
- 5: obere Abflachung
- 6: untere Abflachung
- 7: Funktionselemente
- 8: Grundkörper
- 9: Aushalsung (innen)
- 10: Rohrverteiler
- 11: Aushalsung (nach außen ragend)
- 12: Befestigungsabschnitt primärer Anschlüsse
- 14: Innengewinde
- 15: Dichtfläche
- 16: Schraubnippel
- 17: Verschlussstopfen
- 18: Entlüftungsventil
- 19: Dichtung
- 20: Befestigungsbleche
- 21: Befestigungsbohrung
- 22: Rohrschelle
- 23: Thermostatventil
- 24: Durchflussmesser

## Patentansprüche

1. Rohrverteiler (10) zum Anschließen einer Mehrzahl von Rohren und/oder von Funktionselementen (7) in einem Rohrleitungssystem, insbesondere zum Verbinden von Rohren und Funktionselementen eines Heizungssystems, mit mindestens einem primären Anschluss (1, 2) und mit einer Mehrzahl von sekundären Anschlüssen (3, 4) an einem rohrförmigen Grundkörper (8), welche mit Aushalsungen (9, 11) für eine lösbare Befestigung von Rohren oder Funktionselementen versehen sind, **dadurch gekennzeichnet, dass** der Grundkörper (8) aus einem relativ dünnwandigen, im Querschnitt im Wesentlichen kreiszylindrischen Rohrprofil mit zwei über annähernd die gesamte Länge des Grundkörpers (8) durchgängig parallelen und einander gegenüberliegenden Abflachungen (5, 6) besteht, an welchen die sekundären Anschlüsse (3, 4) vorgesehen sind.

2. Rohrverteiler (10) nach Anspruch 1 , **dadurch gekennzeichnet, dass** der Grundkörper (8) eine über die gesamte Länge gleichbleibende Mindest-Wanddicke derart aufweist, dass in den Aushalsungen (9, 11) und an Öffnungen der primären Anschlüsse (1, 2) Gewinde durch eine spanlose Bearbeitung, insbesondere ein Walzen formbar sind.

3. Rohrverteiler (10) nach einem der vorherigen Ansprüche, **dadurch gekennzeichnet, dass** die Abflachungen (5, 6) und die Aushalsungen (9, 11) im Wesentlichen spanlos durch Umformen realisiert sind.

4. Rohrverteiler (10) nach einem der vorherigen Ansprüche, **dadurch gekennzeich-net, dass** die Abflachungen (5, 6) durch einen Biegvorgang ausgehend von einem kreiszylindrischen Rohrprofil hergestellt sind.

5. Rohrverteiler (10) nach einem der vorherigen Ansprüche, **dadurch gekennzeichnet, dass** die Abflachungen (5, 6) in ihrer Breite auf den Durchmesser der sekundären Anschlüsse (3, 4) derart angepasst sind, dass flache und ausreichend breite Dichtbereiche entstehen.

6. Rohrverteiler (10) nach einem der vorherigen Ansprüche, **dadurch gekennzeichnet, dass** mindestens ein sekundärer Anschluss (4) eine nach außen von dem Rohrverteiler (10) weisende Aushalsung (11) aufweist.

7. Rohrverteiler (10) nach einem der vorherigen Ansprüche, **dadurch gekennzeichnet, dass** die Aushalsungen (9, 11) durch Tiefziehen aus dem Material der Wand des Grundkörpers (8) herausgebildet sind.

8. Rohrverteiler (10) nach einem der vorherigen Ansprüche, **dadurch gekennzeichnet, dass** zwei primäre Anschlüsse (1, 2) an gegenüberliegendenden Enden vorgesehen sind, welche eine durch Pressen hergestellte, verjüngte Halsform mit einem zylindrischen Befestigungsabschnitt (12) aufweisen.

9. Verfahren zur Herstellung eines Rohrverteilers für eine Verteilerstation eines Rohrleitungssystems mit einer Mehrzahl von Rohren und/oder Funktionselementen, insbesondere eines Rohrverteilers (10) nach einem der vorherigen Ansprüche 1 bis 8, wobei ausgehend von einem relativ dünnwandigen Rohrprofil ein länglicher Grundkörper (8) mit gegenüberliegenden primären Anschlüssen (1, 2) und einer Mehrzahl von seitlich davon abzweigenden, sekundären Anschlüssen (3, 4) gebildet wird, welche jeweils mit Aushalsungen (9, 11) für eine Befestigung der Rohre und/oder Funktionselemente versehen sind, **gekennzeichnet durch**
a. Verformen der Längsseiten eines kreiszylindrischen relativ dünnwandigen Rohrprofils zur Herstellung von durchgängigen, parallelen und einander gegenüberliegenden Abflachungen (5, 6); und
b. Tiefziehen von Aushalsungen (9, 11) in den jeweiligen Abflachungen (5, 6).

10. Verfahren nach Anspruch 9, **gekennzeichnet durch** Pressformen der Enden des Grundkörpers (8) in verjüngte, halsförmige primäre Anschlüsse (1, 2) mit einem kreiszylindrischen Befestigungsabschnitt.

11. Verfahren nach Anspruch 9 oder 10, **gekennzeichnet durch** Tiefziehen von mindestens einem sekundären Anschluss (4), der eine Aushalsung (11) aufweist, die nach außen von dem Rohrverteiler (10) weist.

12. Verfahren nach einem der Ansprüche 9 bis 11, **gekennzeichnet durch** direktes Walzen von Innengewinden (14) in den Wänden der Aushalsungen (9, 11) und der Befestigungsabschnitte der primären Anschlüsse (1, 2).

13. Verfahren nach einem der Ansprüche 9 bis 12, **gekennzeichnet durch** zeitversetztes Tiefziehen der Aushalsungen (9, 11) von nebeneinanderliegenden sekundären Anschlüssen (3, 4).

14. Verfahren nach Anspruch 11, **gekennzeichnet durch** Fräsbearbeiten der Stimfläche der nach außen weisenden Aushalsung (11) zum Herstellen einer planen Dichtfläche (15) für ein Dichtungsmittel.

## Claims

1. A manifold (10) for connecting a plurality of pipes and/or functional elements (7) in a piping, in particular for connecting pipes and functional elements of a heating system, comprising at least one primary connection (1, 2) and a plurality of secondary connections (3, 4) at a tubular base body (8), which are provided with neck portions (9, 11) for detachably connecting pipes or functional elements, **characterized in that** said base body (8) consists of a relatively thin-walled tubular profile of essentially a circular cylindrical cross-section with two flat portions (5, 6) being continuously parallel and lying opposite to each other over substantially the entire length of said base body (8), on which said secondary connections (3, 4) are provided.

2. The manifold (10) according to claim 1, **characterized in that** said base body (8) has a constant minimum wall thickness over the entire length such that threads may be formed in said neck portions (9, 11) and at openings of said primary connections (1, 2) by non-cutting shaping, in particular by rolling.

3. The manifold (10) according to any one of the preceding claims, **characterized in that** said flat portions (5, 6) and said neck portions (9, 11) are substantially realized by non-cutting shaping.

4. The manifold (10) according to any one of the preceding claims, **characterized in that** said flat portions (5, 6) are produced by a bending operation starting from a tubular profile of a circular cylindrical shape.

5. The manifold (10) according to any one of the preceding claims, **characterized in that** the width of said flat portions (5, 6) is adapted to the diameter of said secondary connections (3, 4) such that flat and sufficiently wide sealing areas are produced.

6. The manifold (10) according to any one of the preceding claims, **characterized in that** at least one secondary connection (4) has a neck portion (11) projecting to the outside of said manifold (10).

7. The manifold (10) according to any one of the preceding claims, **characterized in that** said neck portions (9, 11) are made from the material of the wall of said base body (8) by deep-drawing.

8. The manifold (10) according to any one of the preceding claims, **characterized in that** two primary connections (1, 2) having the shape of a tapered neck with a cylindrical fastening portion (12) and formed by pressing are provided at opposite ends.

9. A method for manufacturing a manifold for a distribution station of a piping, comprising a plurality of pipes and/or functional elements, in particular a manifold (10) according to any one of the preceding claims 1 to 8, wherein, starting from a relatively thin-walled tubular profile, an elongate base body (8) with opposite primary connections (1, 2) and a plurality of secondary connections (3, 4) branching laterally off therefrom is formed, which are each provided with neck portions (9, 11) for the fastening of pipes and/or functional elements, **characterized by**
a) deformation of the longitudinal sides of a circular cylindrical, relatively thin-walled tubular profile for manufacturing continuous, parallel and opposite flat portions (5, 6); and
b) deep-drawing of neck portions (9, 11) in said respective flat portions (5, 6).

10. The method according to claim 9, **characterized by** press-forming the ends of said base body (8) into tapered, neck-shaped primary connections (1, 2) having a circular cylindrical fastening portion.

11. The method according to claim 9 or 10, **characterized by** deep-drawing of at least one secondary connection (4) having a neck portion (11) projecting to the outside of said manifold (10).

12. The method according to any one of claims 9 to 11. **characterized by** directly rolling of inner threads (14) in the walls of said neck portions (9, 11) and the fastening portions of said primary connections (1, 2).

13. The method according to any one of claims 9 to 12, **characterized by** a delayed deep-drawing of said neck portions (9, 11) of said adjacent secondary connections (3, 4).

14. The method according to claim 11, **characterized by** milling the front surface of said neck portion (11) projecting to the outside for producing a planar sealing surface (15) for a sealing means.

## Revendications

1. Un distributeur (10) pour raccorder une pluralité de tuyaux et/ou d'éléments fonctionnels (7) à un système de tuyauterie, particulièrement pour raccorder des tuyaux et des éléments fonctionnels d'un système de chauffage, avec au moins un raccord primaire (1, 2) et une pluralité de raccords secondaires (3, 4) à un corps de base (8) tubulaire, qui sont équipés avec des gorges (9, 11) pour une fixation détachable de tuyaux ou d'éléments fonctionnels, **caractérisé en ce que** le corps de base (8) se compose d'un profilé tubulaire à paroi relativement mince et à une section sensiblement cylindrique circulaire avec deux méplats (5, 6) parallèles continus et opposés sur approximativement toute la longueur du corps de base (8), auxquels sont prévus les raccords secondaires (3, 4).

2. Le distributeur (10) selon la revendication 1, **caractérisé en ce que** le corps de base (8) a une épaisseur de paroi minimale constante sur toute la longueur de sorte que des filets peuvent être formés dans les gorges (9, 11) et aux ouvertures des raccords primaires (1, 2) par un usinage sans enlèvement de copeaux, particulièrement par un roulage.

3. Le distributeur (10) selon l'une des revendications précédentes, **caractérisé en ce que** les méplats (5, 6) et les gorges (9, 11) sont sensiblement réalisés par une déformation plastique sans enlèvement de copeaux.

4. Le distributeur (10) selon l'une des revendications précédentes, **caractérisé en ce que** les méplats (5, 6) sont formés par une déformation plastique par flexion à partir d'un profilé tubulaire cylindrique circulaire.

5. Le distributeur (10) selon l'une des revendications précédentes, **caractérisé en ce que** la largeur des méplats (5, 6) est adaptée au diamètre des raccords secondaires (3, 4) de sorte qu'il s'y forment des zones d'étanchéité plates et suffisamment larges.

6. Le distributeur (10) selon l'une des revendications précédentes, **caractérisé en ce qu'**au moins un raccord secondaire (4) a une gorge (11) faisant saillie vers l'extérieure du distributeur (10).

7. Le distributeur (10) selon l'une des revendications précédentes, **caractérisé en ce que** les gorges (9, 11) sont formés à partir du matériau de la paroi du corps de base (8) par emboutissage.

8. Le distributeur (10) selon l'une des revendications précédentes, **caractérisé en ce que** deux raccords primaires (1, 2) sont prévus aux extrémités opposées qui ont la forme d'une gorge effilée avec une portion de fixation (12) cylindrique formée par emboutissage.

9. Procédé de fabrication d'un distributeur pour un poste de distribution d'un système de tuyauterie avec une pluralité de tuyaux et/ou d'éléments fonctionnels, en particulière d'un distributeur (10) selon l'une des revendications 1 à 8, selon lequel un corps de base (8) oblong avec des raccords primaires opposés (1, 2) et une pluralité de raccords secondaires (3, 4) branchant latéralement qui sont prévus chacun avec des gorges (9, 11) pour la fixation de tuyaux et/ou d'éléments fonctionnels est formé à partir d'un profilé tubulaire à paroi relativement mince, **caractérisé par**
a) déformer des côtés longitudinaux d'un profilé tubulaire cylindrique circulaire à paroi relativement mince pour la formation de méplats (5, 6) parallèles continus et opposés ; et
b) réaliser par emboutissage des gorges (9, 11) dans les méplats (5, 6) respectifs.

10. Le procédé selon la revendication 9, **caractérisé par** une opération d'emboutissage des extrémités du corps de base (8) en forme des raccords primaires (1, 2) effilés en forme d'une gorge avec une portion de fixation cylindrique circulaire.

11. Le procédé selon la revendication 9 ou 10, **caractérisé par** emboutissage d'au moins un raccord secondaire (4) qui a une gorge (11) faisant saillie vers l'extérieur du distributeur (10).

12. Le procédé selon l'une des revendications 9 à 11, **caractérisé par** un roulage direct de taraudages (14) dans les parois des gorges (9, 11) et des portions de fixation des raccords primaires (1, 2).

13. Le procédé selon l'une des revendications 9 à 12, **caractérisé par** un emboutissage retardé des gorges (9, 11) des raccords secondaires (3, 4) prévus d'une manière juxtaposée.

14. Le procédé selon la revendication 11, **caractérisé par** un fraisage de la surface de front de la gorge (11) faisant saillie vers l'extérieur pour former une surface d'étanchéité (15) plane pour un moyen d'étanchéité.
